(19) Europäisches Patentamt
European Patent Office
Office européen des brevets

(11) Publication number: **0 015 737**
**B1**

(12) # EUROPEAN PATENT SPECIFICATION

(45) Date of publication of patent specification: **11.05.83**

(51) Int. Cl.³: **C 25 D 21/16,**
B 01 D 13/02, C 23 C 3/02

(21) Application number: **80300642.8**

(22) Date of filing: **04.03.80**

(54) **Process for the regeneration of electroless plating baths.**

(30) Priority: **05.03.79 US 17086**

(43) Date of publication of application:
**17.09.80 Bulletin 80/19**

(45) Publication of the grant of the patent:
**11.05.83 Bulletin 83/19**

(84) Designated Contracting States:
**BE DE FR GB NL**

(56) References cited:
**DE - A - 2 606 586**
**GB - A - 1 411 293**
**US - A - 3 909 381**
**US - A - 4 049 519**
**US - A - 4 105 534**

(73) Proprietor: **ELECTROCHEM INTERNATIONAL, INC.**
**4314 Main Street**
**Pittsburgh, Pennsylvania 15224 (US)**

(72) Inventor: **Grenda, David W.**
**239 Parker**
**Houston Pennsylvania 14324 (US)**

(74) Representative: **Lambert, Hugh Richmond et al,**
**D. YOUNG & CO. 10 Staple Inn**
**London, WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 015 737 B1

# Process for the regeneration of electroless plating baths

This invention relates to a process for the regeneration of electroless copper plating baths.

Electroless metal plating baths that are used commercially generally contain a water soluble salt of the metal to be deposited on the selected substrate and a reducing agent in an aqueous alkaline solution. A complexing or chelating agent is commonly present to prevent precipitation of metal hydroxide. The reducing agent generally is more effective at high pH values, and large amounts of alkali metal hydroxide are consumed in the reduction of the metal salt. When formaldehyde is used as the reducing agent substantially larger amounts of alkali metal hydroxide are consumed because of disproportionation of formaldehyde with hydroxide into formate. The reaction products of the reduction reaction are alkali metal salts, such as sodium formate and sodium sulfate. A build up of these reaction products within a copper plating bath, for example, causes cuprous oxide to form spontaneously within the plating bath leading to general bath decomposition. Also during the plating process substantial amounts of alkali metal hydroxide are consumed since four moles of alkali metal hydroxide are required for each mole of copper deposited. Thus the pH of the plating bath rapidly drops, causing loss of effective plating, i.e. metal deposition, unless the alkali metal hydroxide is replenished. It would be desirable to selectively remove at least a portion of the reaction product anions and also increase the pH of the plating bath whereby only a solution of the metal salt and reducing agent, together with a small amount of the chelating or complexing agent, if needed, is added to the regenerated plating bath to provide a plating bath again suitable for electroless plating.

In accordance with the present invention, in its broadest aspects, a process is provided for removing at least a portion of the anionic reaction products from a spent electroless copper plating bath of the type comprising an alkaline aqueous solution of a water soluble copper salt, a reducing agent and a chelating agent, the spent bath containing in solution alkali metal salts produced *in situ* during the plating process, by withdrawing the undesired anions through an anionic permselective membrane. In the process of this invention the spent plating bath from an electroless copper plating bath is regenerated in a regeneration zone or centre compartment of an electrodialytic cell positioned between an anolyte compartment and a catholyte compartment. Two anionic perm-selective membranes separate the respective compartments and permit the selective passage or migration of anions therethrough, to the substantial exclusion of cations. The catholyte compartment contains a source of hydroxyl anions in aqueous solution generally an alkali metal hydroxide, while the anolyte compartment contains an aqueous solution, either alkaline or acidic. The solution in the anolyte compartment is selected to receive the anionic reaction products or by-products of the reduction reaction that occurs during the electroless plating. The electrodialytic cell is arranged during operation to effect the migration of hydroxyl ions from the catholyte zone through the anionic membrane to the regeneration zone or centre compartment, and also to effect concurrently the migration of the anions of the reaction product salts from the regeneration zone through the anionic membrane into the anolyte zone, thereby effecting replacement of the anions of the alkali metal salts by hydroxyl ions, with resulting increase in pH of the solution in the regeneration zone.

As previously stated a complexing or chelating agent is present to prevent precipitation of metal hydroxide. Sodium ethylenediaminetetraacetate (hereinafter in the specification referred to as EDTA) has so far been found to be most effective to permit the electrodialytic removal of at least a portion of the reaction products from the spent electroless copper plating bath without significant loss of the EDTA.

The process of this invention thus provides for the regeneration of a spent electroless copper plating bath. Such baths are commonly used for plating on non-conductors; for example, for metalizing printed circuit boards and for plating plastics as the starting coat for subsequent electroplating.

The process of this invention is further described with reference to the accompanying drawing which is a diagrammatic view of an electrodialytic cell showing the spent solution in the centre compartment and the transfer of salt anions to the anode compartment while hydroxyl ions are being transferred from the cathode compartment to the centre compartment.

Referring to the drawing, there is diagrammatically illustrated an electrodialytic cell 10 which is divided into three compartments 12, 14 and 16 by two vertical parallel walls 18 and 20. These latter walls are composed at least in part of anion permselective membranes. The spent solution from an electroless copper plating tank (not shown) is introduced into the centre or regeneration compartment 14. The term spent solution as used in this description of the preferred embodiment is intended to designate an electroless plating bath in which copper sulfate has reacted with formaldehyde to reduce the copper sulfate to copper, and form an alkali metal sulfate and an alkali metal formate as reaction products.

The anode compartment 12 has an anode 22 positioned therein and contains an aqueous anolyte solution for receiving anions migrating through the permselective membrane 18. The cathode compartment 16 has a cathode 24 positioned therein and contains an aqueous catholyte solution which is adapted to supply hydroxyl ions, preferably from sodium hydroxide for migration through the permselective membrane 20. The two outer anode and cathode compartments 12 and 16 and the

centre compartment 14 form the electrodialytic cell with the centre or regeneration compartment 14 interposed between the anode and cathode compartments 12 and 16 with anion permselective membranes 18 and 20 in common with the anode compartment 12 and the cathode compartment 16 respectively.

The spent electroless copper plating solution is suitably conducted to the regeneration compartment 14. The copper salt present in the spent solution as the source of copper ions is cupric sulfate, $CuSO_4$. The complexing or chelating agent which is added to prevent precipitation of copper hydroxide is EDTA. Formaldehyde is preferred as the selected reducing agent is the plating operation. Since its reducing power increases with the alkalinity of the solution, the baths are usually operated at a pH above 11. The required alkalinity is preferably provided by sodium hydroxide.

For each mole of copper electrolessly plated, at least two moles of formaldehyde and four moles of hydroxide are consumed and one mole of hydrogen gas is evolved, in accordance with the following equation:

$$1.\ CuSO_4 + 2H_2CO + 4NaOH \rightarrow Cu\cdot + H_2 + 2H_2O + 2HCO_2Na + Na_2SO_4$$

It is these reaction products, sodium formate and sodium sulfate, which if allowed to build up, cause cuprous oxide to form spontaneously within the plating bath, leading to general bath decomposition, as demonstrated by the following reactions:

$$2.\ 2Cu^{+2} + HCHO + 2OH^- \rightarrow Cu_2O + HCO_2— + 3H_2O$$

$$3.\ Cu_2O \rightarrow Cu\cdot + CuO.$$

In addition to reaction products reduction, sodium hydroxide must be maintained in the plating bath as indicated by equation 1. At least four moles of sodium hydroxide are required for each mole of copper deposited for the proper operation of the electroless copper plating bath. The pH of the plating bath is thus critical in the operation of the bath. Formaldehyde has maximum reducing power existing at a pH of 12.8. As the bath is used, the pH is lowered, thus reducing the speed of plating.

In accordance with this invention, hydroxyl ions are caused to electrodialytically migrate from the cathode compartment 16 through the anion permselective membrane wall 20 in a sufficient amount to increase the pH of the solution in the regeneration compartment 14. $H_2$ is evolved at the cathode 24. At the same time the formate and sulfate ions correspondingly electrodialytically migrate from the regeneration compartment 14 through the anion permselective membrane 10 into the anode compartment 12. The formate ions are converted to carbon dioxide and water; and oxygen is evolved at the anode. The sulfate ions may be converted to sulfuric acid and collected when sulfuric acid is present in the anolyte compartment 12. When sodium hydroxide is present in the anolyte compartment 12 the sulfate ion reacts with the sodium hydroxide to form sodium sulfate.

Thus, through the use of this invention, the products of reaction, sodium formate and sodium sulfate, are reduced to a concentration which is not detrimental to the plating solution. All that is required to prepare a suitable plating solution is to add copper sulfate, formaldehyde and when needed a small amount of EDTA.

Example

A 3-compartment electrodialytic cell having a configuration corresponding to that shown diagrammatically in the drawing was used to demonstrate the effectiveness of the invention. The electrodialytic cell had the following specifications:

Anode: platinum on titanium 2" × 3.2" (5.08 × 8.13 cms)
Cathode: stainless steel 2" × 3.2" (5.08 × 8.13 cms)
Anion Membranes: Neosepta ACLE—5P made by Tokuyama Soda Co., Tokuyama, Japan
Current Density: 25 ASF (269 $A/m^2$)

Results

Where sodium hydroxide is present in the anode compartment, the following occurred:

| Time | Anode Compartment 3000 ml | Cathode Compartment 3000 ml | Regeneration Compartment 2000 ml | Rectifier |
|---|---|---|---|---|
| 0 | NaOH 46.6 g/l<br>$Cu^{++}$ ____g<br>$Na_2CO_3$ 1.6 g/l<br>$SO_4^{=}$ ______ | NaOH 43.3 g/l<br>$Cu^{++}$ ______ | pH 11.6<br>$Cu^{+2}$ 2.8 g/l<br>$H_2CO$ 1.4 g/l<br>EDTA 27.8 g/l<br>$SO_4^{=}$ 31.2 g/l | 6.2 VDC<br>2.5 A |
| 60 min | NaOH 43.4 g/l<br>$Cu^{++}$ 13 ppm<br>$Na_2CO_3$ 3.2 g/l<br>$SO_4^{=}$ .615 g/l | NaOH 43.4 g/l<br>$Cu^{++}$ 4 ppm | pH 12.4<br>$Cu^{++}$ 2.85 g/l<br>$H_2CO$ 1.4 g/l<br>EDTA 27.7 g/l<br>$SO_4^{=}$ 30.20 g/l | 6.2 VDC<br>2.5 A |
| 90 min | NaOH 41.7 g/l<br>$Cu^{++}$ 30 ppm<br>$Na_2CO_3$ 6.3 g/l<br>$SO_4^{=}$ 1.20 g/l | NaOH 43.4 g/l<br>$Cu^{++}$ 6.5 ppm | pH 12.6<br>$Cu^{++}$ 2.80 g/l<br>$H_2CO$ 1.4 g/l<br>EDTA 27.6 g/l<br>$SO_4^{=}$ 29.5 g/l | 6.2 VDC<br>2.5 A |

As shown by the data 2000 ml of the spent solution were circulated through the regeneration compartment for a period of 90 minutes. The concentration of EDTA in the regeneration compartment remained substantially the same while the pH of the solution increased from 11.6 to 12.6. The $Cu^{++}$ and formaldehyde concentration remained substantially the same after treatment for 90 minutes while the sodium carbonate in the anode compartment increased from 1.6 grams per litre. The sulfate increased from 0 to 1.20 grams per litre in the anode compartment. Where sulfuric acid was present in the anode compartment, the following occurred:

| Time | Anode Compartment 2000 ml | Cathode Compartment 3000 ml | Regeneration Compartment 2000 ml | Rectifier |
|---|---|---|---|---|
| 0 | $H_2SO_4$ 22.0 g/l<br>$Cu^{++}$ 4.7 ppm | NaOH 43.4 g/l<br>$Cu^{++}$ 6.7 ppm | pH 11.6<br>$Cu^{+2}$ 2.8 g/l<br>$H_2CO$ 1.4 g/l<br>EDTA 27.9 g/l | 7.0 VDC<br>2.5 A |
| 75 min | $H_2SO_4$ 27.9 g/l<br>$Cu^{++}$ 12.5 ppm<br>$H_2CO_3$ ______ | NaOH 43.4 g/l<br>$Cu^{++}$ 5.2 ppm | pH 12.6<br>$Cu^{++}$ 2.8 g/l<br>$H_2CO$ 1.4 g/l<br>EDTA 27.7 g/l | 7.0 VDC<br>2.5 A |

As shown by the data 2000 ml of the spent solution were circulated through the regeneration compartment for a period of 75 minutes. The concentration of EDTA in the regeneration compartment remained substantially the same while the pH of the solution increased from 11.6 to 12.6. The $Cu^{++}$ and formaldehyde concentration remained substantially the same after the 75 minute period with a negligible amount of $Cu^{++}$, i.e., 7.8 ppm migrating into the anode compartment while the $H_2SO_4$ in the anode compartment increased from 22.0 grams per litre to 27.9 grams per litre evidencing removal of sulfate ions from the regeneration compartment, $CO_2$ evolved in the anode compartment evidencing the removal of the formate.

The experiments reported below were conducted to establish the applicability of the present invention for the regeneration of spent electroless copper plating baths wherein (1) various complexing or chelating agents (other than EDTA) to prevent precipitation of copper hydroxide were used and (2) different but commonly used soluble copper salts (other than $CuSO_4$) were used as the source of cupric ions in an electroless copper plating bath.

(1) Complexing or Chelating Agents:

Although EDTA is specifically cited herein as the preferred complexing agent for the cupric ions in the bath, several other compounds are employed in this capacity in the electroless copper plating industry. It was the intention of this study to test baths using other complexing agents and ascertain whether these compounds would also remain contained in the regeneration compartment and show no movement into the anolyte compartment during the electrodialysis process of this invention. Groups of complexing agents were evaluated by testing one representative compound most commonly used by electroless copper platers. Bath compositions were selected from various patents citing the particular complexing agent tested and care was taken to simulate a spent bath by addition of a large excess of sodium sulfate as a reaction product. The cell specifications and conditions described in the Example were closely followed.

The complexing agents tested were:

(1) Sodium Potassium Tartrate (Rochelle Salts)

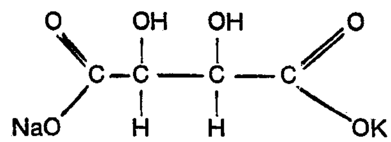

(2) Thioglycollic Acid (thio derivatives of alkyl glycols)

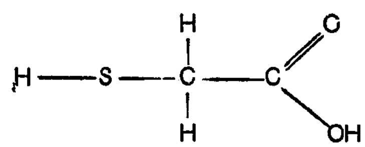

(3) Triethanolamine (polyaminoalcohols)

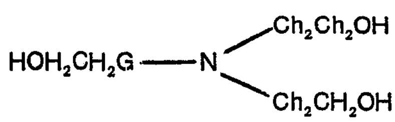

(4) Nitrilotriacetic Acid – NTA (polycarboxylic acids)

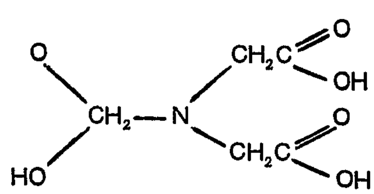

(5) Hydroxyethylenediaminetriacetic acid – HEDTA (modified ethylenediaminetetraacetic acids)

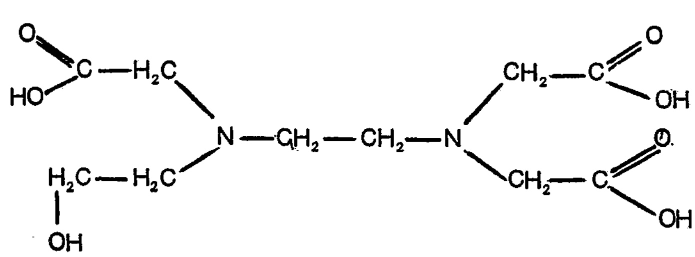

(6) Glycono Lactone (widely used due to commercial availability)

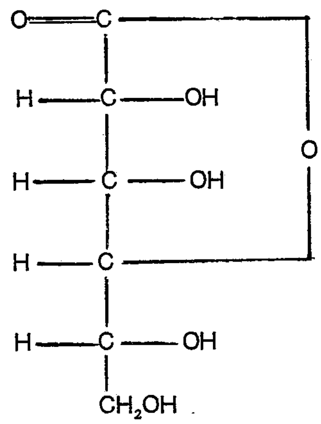

Each complexing agent was tested as a component of a 3000 ml bath used as the regeneration compartment of the cell. The anolyte compartment was 3000 ml of 30 g/l $H_2SO_4$ and the catholyte compartment was 3000 ml of 50 g/l NaOH. Two hour runs of each complexing agent were conducted at 50 ASF (538 A/m²) (5A, 8.5—9.5 VDC). As reaction products, 30 g/l $Na_2SO_4$ was present.

RESULTS

| | Complexing Agent Transferred Out of Regeneration Compartment | Cu Transferred Out of Regeneration Compartment | Efficiency of $SO_4$ Transferred Out of Regeneration Compartment |
|---|---|---|---|
| NaK Tartrate | None | .5 ppm/h | 40% |
| Thioglycollic Acid | None | 1.0 ppm/h | 44% |
| Triethanolamine | None | .6 ppm/h | 48% |
| NTA | None | 3 ppm/h | 53% |
| HEDTA | 650 ppm/h | 50 ppm/h | 65% |
| Glucono lactone | None | .75 ppm/h | 54% |

The above results compare favourably with the data of the original work using E.D.T.A. as the complexing agent. The study affords strong evidence that the basic principle of the present invention is essentially unaffected by the choice of complexing agent selected from those commonly used. No transfer of complexing agent in all but one case and only trace losses of copper out of the regeneration compartment, coupled with the continued successful removal of sulfate reaction products is positive confirmation of the applicability of the invention as defined.

The HEDTA testing was the only area in which results departed from the ideal case. In this case, small amounts of copper and HEDTA were observed migrating into the anolyte compartment. However, efficient removal of the sulfate reaction product was not interfered with and the overall operation of the cell was normal.

None of the complexing agents selected from the various classes of complexing agents interfered with the efficient removal of reaction products from a spent electroless copper plating bath in accordance with the present invention.

(2) Soluble Copper Salts

Cupric sulfate is generally recognized as the preferred copper salt for electroless copper plating. However, other water soluble copper salts, such as the chloride, nitrate and acetate may also be used

as the source of cupric ions. An electroless copper plating bath using copper chloride as the source of cupric ions was tested in the cell described in the Example. The cell specifications and conditions were as described therein, using copper chloride as the source of cupric ions, EDTA and 30 g/l sodium sulfate as reaction product. This test was also run for two hours.

Results at the end of two hours:

Complexing Agent Transferred Out of Regeneration Compartment — None
Cu Transferred Out of Regeneration Compartment — 2.6 ppm
Efficiency of $SO_4$ Transferred Out of Regeneration Compartment — 48%

Conclusion:

The excellent results obtained in the copper chloride testing coupled with the previous success of the copper sulfate, points strongly to the use of any water soluble cupric salt as the source of cupric ions in an electroless copper plating bath for the purpose of this invention.

**Claims**

1. A process for the regeneration of spent electroless copper plating baths of the type comprising an alkaline aqueous solution of a water-soluble copper salt, a reducing agent and a chelating agent, the spent bath containing in solution alkali metal salts produced *in situ* during the plating process, characterised in that the spent solution is regenerated by electrodialysis in a regeneration zone or centre compartment of an electrodialytic cell, said regeneration zone or compartment being located between an anode compartment containing an anolyte and a cathode compartment containing a catholyte comprising a source of hydroxyl ions and separated therefrom by anion permselective membranes which permit, respectively, the migration of the alkali metal salt anions from the regeneration compartment to the anode compartment and the migration of said hydroxyl ions from the cathode compartment to the regeneration compartment, thereby to effect regeneration of the plating bath in said regeneration compartment by replacement of said alkali metal salt anions by said hydroxyl ions.

2. A process according to claim 1, characterised in that the electrodialytic cell comprises a central regeneration compartment with the anode compartment on one side and the cathode compartment on the other and separated from the regeneration compartment by said anion permselective membranes.

3. A process according to claim 1 or 2, characterised in that the catholyte is an aqueous solution of an alkali metal hydroxide.

4. A process according to claim 3, characterised in that said catholyte is an aqueous solution of sodium hydroxide.

5. A process according to any one of claims 1—4, wherein the anolyte is an aqueous acidic solution.

6. A process according to claim 5, characterised in that the anolyte is an aqueous solution of sulfuric acid.

7. A process according to any one of claims 1—4, characterised in that the anolyte is an aqueous sodium hydroxide solution.

8. A process according to any one of the preceding claims, characterised in that the spent solution is a spent solution of an electroless copper plating bath comprising an aqueous solution containing an alkali metal hydroxide, cupric sulfate, formaldehyde and the sodium salt of ethylenediaminetetraacetic acid.

**Revendications**

1. Un procédé pour la régénération de bains de cuivrage chimique usés du type comprenant une solution aqueuse alcaline d'un sel de cuivre soluble dans l'eau, un agent réducteur et un agent chélatant, le bain usé contenant en solution des sels de métaux alcalins produits in situ pendant l'opération de revêtement caractérisé en ce que la solution usée est régénérée par électrodialyse dans une zone de régénération ou compartiment central d'une cellule d'électrodialyse, ladite zone ou compartiment de régénération étant situé entre un compartiment anodique contenant un anolyte et un compartiment cathodique contenant un catholyte comprenant une source d'ions hydroxyles et étant séparé de ceux-ci par des membranes à perméabilité anionique sélective qui permettent respectivement la migration des anions des sels de métaux alcalins du compartiment de régénération au compartiment anodique et la migration desdits ions hydroxyles du compartiment cathodique au compartiment de régénération, pour effecteur ainsi la régénération du bain de revêtement dans ledit compartiment de régénération par remplacement desdits anions de sel de métal alcalin par lesdits ions hydroxyles.

2. Un procédé selon la revendication 1, caractérisé en ce que la cellule d'électrodialyse comprend un compartiment central de régénération avec le compartiment anodique d'un côté et le compartiment

cathodique de l'autre et séparés du compartiment de régénération par lesdites membranes à perméabilité anionique sélective.

3. Un procédé selon la revendication 1 ou 2, caractérisé en ce que le catholyte est une solution aqueuse d'un hydroxyde de métal alcalin.

4. Un procédé selon la revendication 3, caractérisé en ce que ledit catholyte est une solution aqueuse d'hydroxyde de sodium.

5. Un procédé selon l'une quelconque des revendications 1 à 4, dans lequel l'anolyte est une solution aqueuse acide.

6. Un procédé selon la revendication 5, caractérisé en ce que l'anolyte est une solution aqueuse d'acide sulfurique.

7. Un procédé selon l'une quelconque des revendications 1 à 4, caractérisé en ce que l'anolyte est une solution aqueuse d'hydroxyde de sodium.

8. Un procédé selon l'une quelconque des revendications précédentes, caractérisé en ce que la solution usée est une solution usée d'un bain de cuivrage chimique comprenant une solution aqueuse contenant un hydroxyde de métal alcalin, du sulfate cuivrique, du formaldéhyde et le sel de sodium de l'acide éthylènediaminetétraacétique.

**Patentansprüche**

1. Verfahren zur Regenerierung verbrauchter Bäder der stromlosen Verkupferung, bestehend aus einer alkalischen wäßrigen Lösung eines wasserlöslichen Kupfersalzes, eines Reduktionsmittels und eines Chelatisierungsmittels, wobei das verbrauchte Bad in Lösung Alkalimetallsalze enthält, die während der Verkupferung in situ gebildet wurden, dadurch gekennzeichnet, daß die verbrauchte Lösung durch Elektrodialyse in einer Regenerierzone oder einer Mittelkammer einer elektrodialytischen Zelle regeneriert wird, wobei diese Regenerierzone oder Kammer zwischen einer einen Anolyten enthaltenden Anodenkammer und einer einen Katholyten, der eine Hydroxylionenquelle enthält, enthaltenden Kathodenkammer angeordnet und von diesen durch anionenpermselektiven Membranen getrennt ist, welche jeweils die Wanderung der Alkalimetallsalzanionen aus der Regenerierkammer zu der Anodenkammer und die Wanderung der Hydroxylionen von der Kathodenkammer zu der Regenerierkammer gestatten, wodurch eine Regenerierung des Verkupferungsbades in der Regenerierkammer durch Austausch der Alkalimetallsalzanionen durch die Hydroxylionen erfolgt.

2. Verfahren nach Anspruch 1, dadurch gekennzeichnet, daß die elektrodialytische Zelle eine mittige Regenerierkammer mit der Anodenkammer auf der einen Seite und der Kathodenkammer auf der anderen Seite umfaßt und daß letztere Kammern von der Regenerierkammer durch die anionenpermselektiven Membranen getrennt sind.

3. Verfahren nach Anspruch 1 oder 2, dadurch gekennzeichnet, daß der Katholyt eine wäßrige Lösung eines Alkalimetallhydroxids ist.

4. Verfahren nach Anspruch 3, dadurch gekennzeichnet, daß der Katholyt eine wäßrige Lösung von Natriumhydroxid ist.

5. Verfahren nach einem der Ansprüche 1 bis 4, worin der Anolyt eine wäßrige saure Lösung ist.

6. Verfahren nach Anspruch 5, dadurch gekennzeichnet, daß der Anolyt eine wäßrige Schwefelsäurelösung ist.

7. Verfahren nach einem der Ansprüche 1 bis 4, dadurch gekennzeichnet, daß der Anolyt eine wäßrige Natriumhydroxidlösung ist.

8. Verfahren nach einem der vorausgehenden Ansprüche, dadurch gekennzeichnet, daß die verbrauchte Lösung eine verbrauchte Lösung eines Bades aus der stromlosen Verkupferung ist, das eine wäßrige Lösung ist, welche ein Alkalimetallhydroxid, Kupfer-II-sulfat, Formaldehyd und das Natriumsalz von Äthylendiamintetraessigsäure enthält.

0 015 737

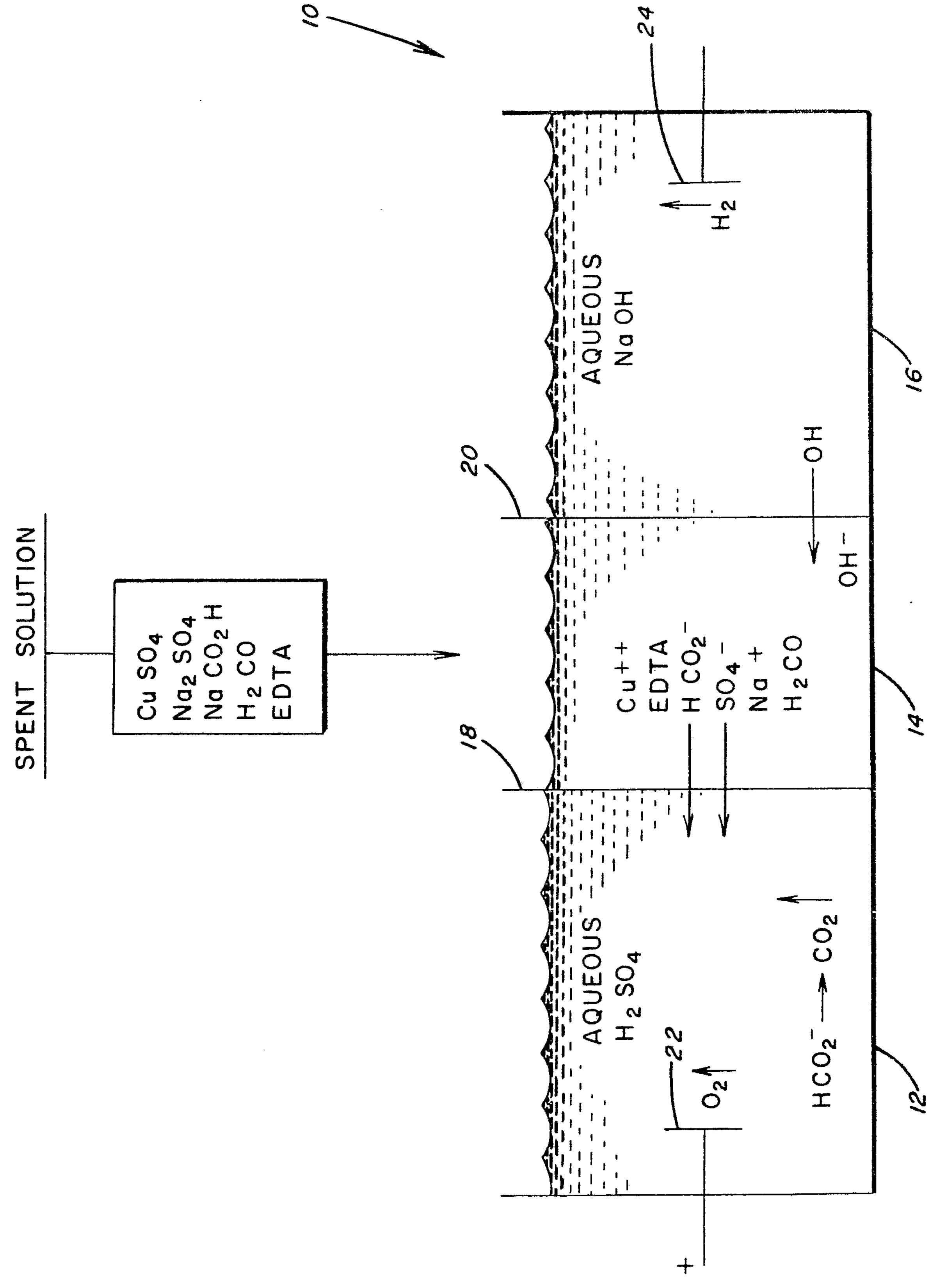
10
SPENT SOLUTION
Cu SO4
Na2 SO4
Na CO2 H
H2 CO
EDTA
AQUEOUS
H2 SO4
O2
22
HCO2- ⟶ CO2
12
18
Cu++
EDTA
H CO2-
SO4-
Na +
H2 CO
OH-
14
20
OH
AQUEOUS
Na OH
H2
24
16
+